# EUROPEAN PATENT SPECIFICATION

(11) **EP 4 353 688 B1**
(45) Date of publication and mention of the grant of the patent: **22.07.2026**
(21) Application number: 23199340.3
(22) Date of filing: 25.09.2023
(51) Int. Cl.: B01J 4/00, B01J 7/00, B01J 19/12, C01B 3/042, C01B 13/02, C02F 1/02

(54) **PHOTOCATALYTIC DECOMPOSITION APPARATUS**
PHOTOKATALYTISCHE ZERSETZUNGSVORRICHTUNG
APPAREIL DE DÉCOMPOSITION PHOTOCATALYTIQUE

(30) Priority: 30.09.2022 JP 2022157805
(43) Date of publication of application: 17.04.2024
(73) Proprietor: Hitachi, Ltd., Tokyo 100-8280 (JP)
(72) Inventor: FUKATANI, Naoto, Chiyoda-ku,, 100-8280 (JP); TAKAHASHI, Hiromasa, Chiyoda-ku,, 100-8280 (JP); NAKAMURA, Keigo, Chiyoda-ku,, 100-8280 (JP); TAKAMATSU, Daiko, Chiyoda-ku,, 100-8280 (JP); YABUUCHI, Shin, Chiyoda-ku,, 100-8280 (JP); HAYAKAWA, Jun, Chiyoda-ku,, 100-8280 (JP)
(74) Representative: Strehl & Partner mbB

(56) References cited:
- WO-A1-2021/242705
- CN-A- 114 873 677
- FR-B1- 2 833 000
- FR-B1- 2 856 052

## Description

### BACKGROUND OF THE INVENTION

The present invention relates to a photocatalytic decomposition apparatus.

### Background

In recent years, an artificial photosynthesis system can use solar energy to synthesize compounds that can be used as other energy carriers, such as hydrogen, without emitting CO₂, and thus attracts attention as a method for generating clean energy. One of methods for sustainably generating hydrogen or the like is a method using renewable energy such as sunlight, and seawater that is not being effectively used.

As an example of such techniques, for example, there is WO2004/085306. WO2004/085306 discloses a water photolysis apparatus including a casing 1 having a light transmission window 12 through which sunlight L is transmitted, and a photolysis layer 5 disposed in the casing 1. A configuration is disclosed in which the photolysis apparatus is disposed in a state of floating on a water layer 9, water vapor evaporates from the water layer 9 due to irradiation with the sunlight L and is introduced into the photolysis layer 5, photocatalyst particles 52 are excited by the sunlight L in the photolysis layer 5, and the introduced water vapor is decomposed into hydrogen and oxygen in the photolysis layer 5. According to the configuration disclosed in WO2004/085306, it is possible to efficiently obtain hydrogen and oxygen by suppressing a reverse reaction, and to provide a water photolysis apparatus that can promote the photolysis of water by effectively using solar energy.

### SUMMARY OF THE INVENTION

In the conventional artificial photosynthesis system, when seawater is decomposed directly, chloride ions contained in seawater are discharged as hypochlorous acid and toxic chlorine gas, which may lead to corrosion and degradation of the apparatus and environmental pollution.

In addition, although chloride ions can be removed by vaporizing seawater once, a mechanism for efficiently supplying seawater to the apparatus and efficiently vaporizing the seawater at the time of the removal is required. Under such circumstances, it has been desired to consider a configuration for supplying and vaporizing seawater more efficiently than conventional techniques such as the above-described WO 2004/085306 A1.

WO 2021/242705 A1 discloses a photocatalytic decomposition apparatus. Other examples of a conventional photocatalytic decomposition apparatus are given in FR 2 856 052 B1, CN 114 873 677 A, and FR 2 833 000 B1.

In view of the above-described circumstances, an object of the present invention is to provide a photocatalytic decomposition apparatus capable of efficiently supplying and vaporizing water to be decomposed by using a photocatalyst.

To solve the above-described problems, the present invention provides the photocatalytic decomposition apparatus defined in claim 1.

More specific configurations according to the present invention are described in the dependent claims.

According to the present invention, it is possible to provide a photocatalytic decomposition apparatus capable of efficiently supplying and vaporizing water to be decomposed by using a photocatalyst.

Problems, configurations, and effects other than those described above will be clarified by the description of the following embodiments.

### BRIEF DESCRIPTION OF THE DRAWINGS

FIG. 1A is a diagram schematically illustrating a photocatalytic decomposition apparatus according to a first embodiment.
FIG. 1B is an enlarged diagram illustrating a steam generator illustrated in FIG. 1A.
FIG. 2 is a diagram schematically illustrating a photocatalytic decomposition apparatus according to a second embodiment.
FIG. 3 is a diagram schematically illustrating a photocatalytic decomposition apparatus according to a third embodiment.
FIG. 4 is a diagram schematically illustrating a photocatalytic decomposition apparatus according to a fourth embodiment.

### DETAILED DESCRIPTION OF THE PREFERRED EMBODIMENTS

A configuration according to the present invention is described below in detail with reference to the accompanying drawings.

### First Embodiment

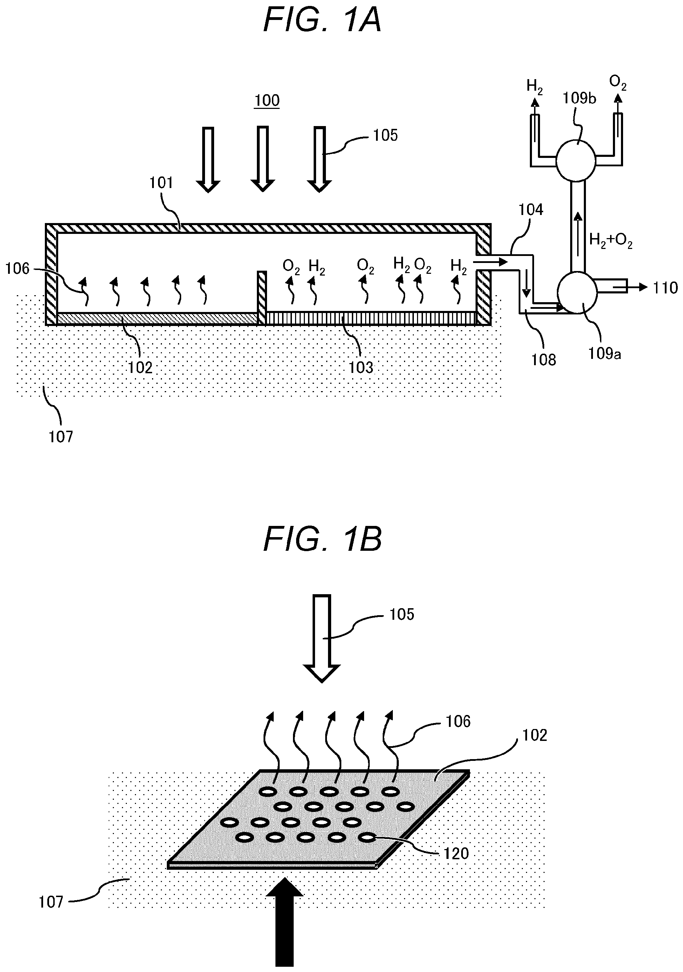

FIG. 1A is a diagram schematically illustrating the photocatalytic decomposition apparatus according to a first embodiment. As illustrated in FIG. 1A, a photocatalytic decomposition apparatus 100 according to the present embodiment includes a steam generator 102 that absorbs light 105 supplied from a light source to generate heat and generates steam 106 from water obtained from a water layer 107, a photocatalytic decomposer 103 that includes a photocatalyst and causes the light 105 supplied from the light source and the steam 106 generated by the steam generator 102 to react with the photocatalyst so as to decompose the steam 106, and a casing 101 housing the steam generator 102 and the photocatalytic decomposer 103. In the present embodiment, the sun is used as the light source, and seawater is used as the water layer 107. Each configuration is described below in detail.

### (1) Casing

The casing 101 is made of a material through which the light 105 incident from the light source such as the sun is transmitted.

### (2) Steam generator

FIG. 1B is an enlarged diagram illustrating the steam generator illustrated in FIG. 1A. As illustrated in FIG. 1B, the steam generator 102 is made of a material having a large number of pores (pores penetrating in the steam generator 102 from an upper end of the steam generator 102 to a lower end of the steam generator 102), and can efficiently suck up water in a direction indicated by black arrows in FIG. 1B from the water layer 107 by a capillary action of the pores 120. In addition, the steam generator 102 generates heat by the light 105, and efficiently vaporize water sucked up from the water layer 107 and remaining on the surface of the steam generator 102.

The steam generator 102 is preferably made of, for example, a carbon-based material such as graphite, graphene, or a carbon nanotube.

The porosity (the volume ratio of the pores in the steam generator 102) of the steam generator 102 is 10% by volume or higher and 90% by volume or lower. When the porosity is lower than 10%, it is difficult to form pores penetrating from the upper end to the lower end of the steam generator 102, and it is not possible to suck up water to be efficiently supplied to the photocatalytic decomposer 103. On the other hand, when the porosity is higher than 90%, it is difficult to sustainably decompose water due to insufficient strength and damage.

### (3) Photocatalytic decomposer 103

The photocatalytic decomposer 103 contains a photocatalyst material and decomposes steam generated by the steam generator 102 and water liquefied by cooling steam into hydrogen (H₂) and oxygen (O₂) by the light 105 and the photocatalyst.

The material of the photocatalyst is is adapted to absorb light to excite electrons. Material of the photocatalyst is chosen among TiO₂, SrTiO₃, SrTiO₂N, BaTaO₂N, NaTaO₃, WO₃, ZnO, Fe₂O₃, CuO, Ta₂O₅, Bi₂O₃, SnO₂, BiVO₄, and Y₂Ti₂O₅S₂. In order to promote the reaction, a material that can serve as a promoter is appropriately modified on the surface of the material of the photocatalyst. Material of the promoter can be chosen among Pt, Ru, Rh, and Au. In addition, the material of the photocatalyst may be supported by a substrate. Furthermore, the material of the photocatalyst may be a mixture of powders functioning as an anode and a cathode or may be a pressed powder or a sheet.
Furthermore, a photoelectrode structure in which an anode portion and a cathode portion are separated may be used.

The gases (generated gases: H₂ and O₂) generated by the photocatalytic decomposer 103 can be collected through a collection port 104. Although not illustrated, a mechanism capable of trapping extra steam, for example, a mechanism such as a Liebig condenser, may be provided at an edge of the collection port 104. A mechanism is preferably provided, which transfers the generated gases in a pipe 108 by a pump 109a, separates a gas other than H₂ and O₂, discharges an exhaust gas 110, and separates the gases into H₂ and O₂ using a pump 109b after the trapping of the steam. Furthermore, a mechanism is preferably provided, which uses trapped fresh water to remove salt partially precipitated in the steam generator 102.

According to the photocatalytic decomposition apparatus 100 according to the present embodiment, in the steam generator 102 having the pores 120, the light 105 is converted into heat, water is vaporized into steam, and water decomposition is performed by the photocatalytic decomposer 103 on the steam or fresh water generated by cooling the steam. Therefore, it is possible to more efficiently decompose water in the photocatalytic decomposition apparatus 100 than the conventional techniques. Water in the water layer 107 is vaporized once before being decomposed in the photocatalytic decomposer 103. Therefore, for example, in a case where the water is seawater, it is possible to suppress the generation of chloride ions and hypochlorous acid in the photocatalytic decomposer 103, and to sustainably decompose seawater without generating harmful and toxic substances contained in the seawater.

The photocatalytic decomposition apparatus 100 according to the present embodiment is not limited to only the use in decomposing water to generate only H₂ and O₂. For example, CO₂ or nitrogen oxide (NOₓ) may be introduced and used for reduction reaction at a cathode portion. In this case, the gaseous species to be reacted can be introduced into a container by providing a separate gas introduction portion. In addition, the gaseous species can be used for synthesis of organic compounds such as formic acid, ethanol, methanol, and methyl.

### Second Embodiment

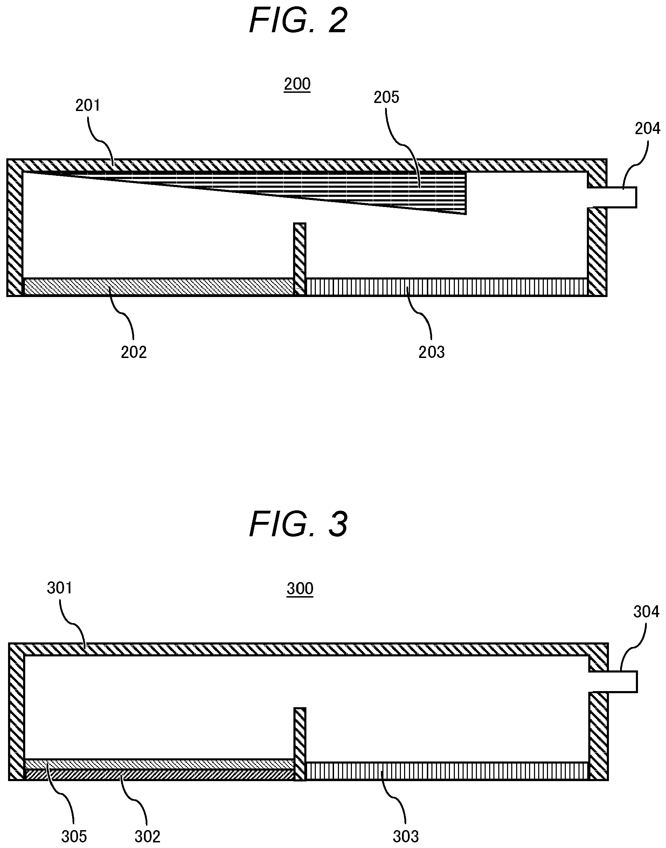

FIG. 2 is a diagram schematically illustrating the photocatalytic decomposition apparatus according to a second embodiment. FIG. 2 illustrates a casing 201 of a photocatalytic decomposition apparatus 200 and an internal structure of the photocatalytic decomposition apparatus 200. As illustrated in FIG. 2, in the present embodiment, an inclined portion 205 that is inclined in a lateral direction is provided on an upper surface of the casing 201, steam generated by a steam generator 202 moves along the inclined portion 205 so as to be cooled and become fresh water, which is introduced into a photocatalytic decomposer 203. The fresh water introduced in the photocatalytic decomposer 203 is decomposed by a photocatalytic reaction in a similar manner to steam.

With this configuration, it is possible to more efficiently supply water to be decomposed than the supply of steam to the photocatalytic decomposer 203, and to more efficiently perform photocatalytic decomposition in the overall apparatus than in the first embodiment.

### Third Embodiment

FIG. 3 is a diagram schematically illustrating the photocatalytic decomposition apparatus according to a third embodiment. FIG. 3 illustrates a casing 301 of a photocatalytic decomposition apparatus 300 and an internal structure of the photocatalytic decomposition apparatus 300. As illustrated in FIG. 3, in the present embodiment, a blackbody portion 305 that absorbs light supplied from a light source so as to increase in temperature is provided on an upper surface of a steam generator 302. The blackbody portion 305 is made of a material that absorbs more heat than the steam generator 302. In this configuration, it is possible to efficiently heat water from the water layer, and to more efficiently perform photocatalytic decomposition in the overall apparatus than in the first embodiment.

### Fourth Embodiment

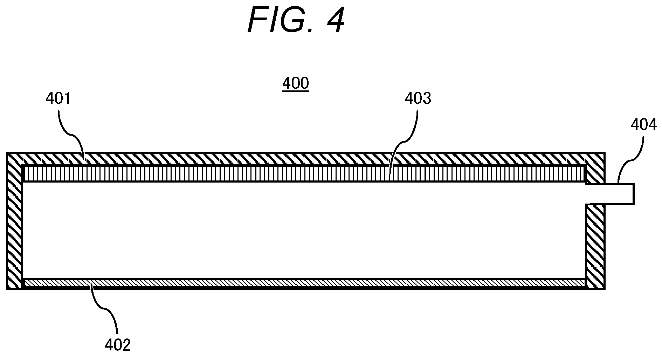

FIG. 4 is a diagram schematically illustrating the photocatalytic decomposition apparatus according to a fourth embodiment. FIG. 4 illustrates a casing 401 of a photocatalytic decomposition apparatus 400 and an internal structure of the photocatalytic decomposition apparatus 400. As illustrated in FIG. 4, in the present embodiment, a photocatalytic decomposer 403 is provided in contact with a surface on which light from the casing 401 is incident. In the photocatalytic decomposer 403, a substrate holding a photocatalyst is made of a material through which at least infrared light is transmitted. The infrared light transmitted through the photocatalytic decomposer 403 is absorbed by a steam generator 402 and raises the temperature of the steam generator 402. Ultraviolet light and visible light that are not transmitted through the photocatalytic decomposer 403 are absorbed by a photocatalytic material of the photocatalytic decomposer 403, and are used for a photocatalytic reaction and contribute to water decomposition.

In this configuration, it is possible to more efficiently generate heat and decompose water by dividing light from the light source into light for heating water and light for exciting the photocatalyst, and to more efficiently perform photocatalytic decomposition in the overall apparatus than in the first embodiment.

As described above, according to the present invention, it is shown that it is possible to provide a photocatalytic decomposition apparatus capable of efficiently supplying and vaporizing water to be decomposed by using a photocatalyst.

### REFERENCE SIGNS LIST

100, 200, 300, 400: photocatalytic decomposition apparatus, 101, 201, 301, 401: casing, 102, 202, 302, 402: steam generator, 103, 203, 303, 403: photocatalytic decomposer, 104: collection port, 105: light, 106: steam, 107: water layer, 108: pipe, 109a, 109b: pump, 110: exhaust gas, 120: pore, 205: inclined portion, 305: blackbody portion

## Claims

1. A photocatalytic decomposition apparatus (100; 200; 300; 400) that uses a photocatalyst, the photocatalytic decomposition apparatus (100; 200; 300; 400) comprising:
a steam generator (102; 202; 302; 402) that has a large number of pores (120) penetrating the steam generator (102) from an upper end of the steam generator to a lower end of the steam generator, for sucking up water and that is adapted to absorb light (105) supplied from a light source so as to generate heat;
a photocatalytic decomposer (103; 203; 303; 403) containing a photocatalyst material adapted to let steam (106) generated by the steam generator (102; 202; 302; 402) come into contact with the photocatalyst, and the photocatalyst is irradiated with the light (105) supplied from the light source;
a casing (101; 201; 301; 401) housing the steam generator (202) and the photocatalytic decomposer (203) and made of a material through which the light (105) incident from the light source is transmitted,
wherein
the steam generator (102; 202; 302; 402) is in contact with a water layer (107) from which the pores (120) suck up the water by a capillary action,
a porosity of the steam generator (102; 202; 302; 402) is between 10% by volume or higher and 90% by volume or lower, and
the material of the photocatalyst is adapted to absorb light to excite electrons and is chosen among TiO₂, SrTiO₃, SrTiO₂N, BaTaO₂N, NaTaO₃, WO₃, ZnO, Fe₂O₃, CuO, Ta₂O₅, Bi₂O₃, SnO₂, BiVO₄, and Y₂Ti₂O₅S₂,
**characterised in that**
a promoter chosen among Pt, Ru, Rh, and Au is modified on the surface of the material of the photocatalyst, and
the photocatalytic decomposer (103; 203; 303; 403) is adapted to decompose the steam (106) generated by the steam generator (102; 202; 302; 402) or water liquefied by cooling the steam (106) into hydrogen and oxygen by the light (105) and the photocatalyst.

2. The photocatalytic decomposition apparatus (200) according to claim 1, wherein an inclined portion (205) is provided on an inner surface of the casing (101; 201; 301; 401) and adapted to let the steam (106) generated by the steam generator (202) or water move along the inclined portion (205) and be supplied to the photocatalytic decomposer (203).

3. The photocatalytic decomposition apparatus (300) according to claim 1, further comprising a blackbody portion (305) that is provided on an upper surface of the steam generator (302) and is adapted to absorb more heat than the steam generator (302).

4. The photocatalytic decomposition apparatus (400) according to claim 1, wherein the photocatalytic decomposer (403) is provided on a surface on which the light (105) from the casing (401) is incident, and adapted to let the light (105) transmitted through the photocatalytic decomposer (403) be supplied to the steam generator (402).

## Patentansprüche

1. Photokatalytische Zersetzungsvorrichtung (100; 200; 300; 400), die einen Photokatalysator verwendet, wobei die photokatalytische Zersetzungsvorrichtung (100; 200; 300; 400) umfasst:
einen Dampferzeuger (102; 202; 302; 402), der eine große Anzahl von Poren (120) aufweist, die den Dampferzeuger (102) von einem oberen Ende des Dampferzeugers zu einem unteren Ende des Dampferzeugers durchdringen, zum Aufsaugen von Wasser und der dazu ausgelegt ist, von einer Lichtquelle zugeführtes Licht (105) zu absorbieren, um Wärme zu erzeugen;
einen photokatalytischen Zersetzer (103; 203; 303; 403), der ein Photokatalysatormaterial enthält, das dazu ausgelegt ist, von dem Dampferzeuger (102; 202; 302; 402) erzeugten Dampf (106) mit dem Photokatalysator in Kontakt kommen zu lassen, wobei der Photokatalysator mit dem von der Lichtquelle zugeführten Licht (105) bestrahlt wird;
ein Gehäuse (101; 201; 301; 401), das den Dampferzeuger (202) und den photokatalytischen Zersetzer (203) enthält und aus einem Material hergestellt ist, durch das das von der Lichtquelle einfallende Licht (105) transmittiert wird,
wobei
der Dampferzeuger (102; 202; 302; 402) in Kontakt mit einer Wasserschicht (107) steht, aus der die Poren (120) das Wasser durch eine Kapillarwirkung aufsaugen,
eine Porosität des Dampferzeugers (102; 202; 302; 402) zwischen mindestens 10 Volumenprozent und höchstens 90 Volumenprozent liegt, und
das Material des Photokatalysators dazu ausgelegt ist, Licht zu absorbieren, um Elektronen anzuregen, und aus TiO₂, SrTiO₃, SrTiO₂N, BaTaO₂N, NaTaO₃, WO₃, ZnO, Fe₂O₃, CuO, Ta₂O₅, Bi₂O₃, SnO₂, BiVO₄ und Y₂Ti₂O₅S₂ ausgewählt ist,
**dadurch gekennzeichnet, dass**
ein Promotor, der aus Pt, Ru, Rh und Au ausgewählt ist, an der Oberfläche des Materials des Photokatalysators modifiziert ist, und
der photokatalytische Zersetzer (103; 203; 303; 403) dazu ausgelegt ist, den von dem Dampferzeuger (102; 202; 302; 402) erzeugten Dampf (106) oder durch Kühlung des Dampfes (106) verflüssigtes Wasser durch das Licht (105) und den Photokatalysator in Wasserstoff und Sauerstoff zu zerlegen.

2. Photokatalytische Zersetzungsvorrichtung (200) nach Anspruch 1, wobei ein geneigter Abschnitt (205) an einer Innenoberfläche des Gehäuses (101; 201; 301; 401) vorgesehen und dazu ausgelegt ist, den von dem Dampferzeuger (202) erzeugten Dampf (106) oder Wasser entlang des geneigten Abschnitts (205) bewegen zu lassen und dem photokatalytischen Zersetzer (203) zuzuführen.

3. Photokatalytische Zersetzungsvorrichtung (300) nach Anspruch 1, ferner umfassend einen Schwarzkörperabschnitt (305), der an einer oberen Fläche des Dampferzeugers (302) vorgesehen und dazu ausgelegt ist, mehr Wärme zu absorbieren als der Dampferzeuger (302).

4. Photokatalytische Zersetzungsvorrichtung (400) nach Anspruch 1, wobei der photokatalytische Zersetzer (403) an einer Fläche vorgesehen ist, auf die das Licht (105) von dem Gehäuse (401) einfällt, und dazu ausgelegt ist, das durch den photokatalytischen Zersetzer (403) übertragene Licht (105) dem Dampferzeuger (402) zuzuführen.

## Revendications

1. Appareil (100 ; 200 ; 300 ; 400) de décomposition photocatalytique qui utilise un photocatalyseur, l'appareil (100 ; 200 ; 300 ; 400) de décomposition photocatalytique comprenant :
un générateur (102 ; 202 ; 302 ; 402) de vapeur qui a un grand nombre de pores (120) pénétrant le générateur (102) de vapeur depuis une extrémité supérieure du générateur de vapeur jusqu'à une extrémité inférieure du générateur de vapeur, pour aspirer de l'eau vers le haut et qui est adapté à absorber une lumière (105) amenée depuis une source de lumière de façon à générer de la chaleur ;
un décomposeur photocatalytique (103; 203 ; 303 ; 403) contenant un matériau photocatalyseur adapté à laisser une vapeur (106) générée par le générateur (102 ; 202 ; 302 ; 402) de vapeur venir en contact avec le photocatalyseur, et le photocatalyseur est irradié avec la lumière (105) amenée depuis la source de lumière ;
un boîtier (101 ; 201, 301 ; 401) logeant le générateur (202) de vapeur et le décomposeur photocatalytique (203) et constitué d'un matériau à travers lequel la lumière (105) incidente provenant de la source de lumière est transmise,
dans lequel
le générateur (102 ; 202 ; 302 ; 402) de vapeur est en contact avec une couche d'eau (107) depuis laquelle les pores (120) aspirent l'eau vers le haut par une action capillaire,
une porosité du générateur (102 ; 202 ; 302 ; 402) de vapeur est entre 10% en volume ou plus et 90% en volume ou moins, et
le matériau du photocatalyseur est adapté à absorber une lumière pour exciter des électrons et est choisi parmi TiO₂, SrTiO₃, SrTiO₂N, BaTaO₂N, NaTaO₃, WO₃, ZnO, Fe₂O₃, CuO, Ta₂O₅, Bi₂O₃, SnO₂, BiVO₄, et Y₂Ti₂O₅S₂,
**caractérisé en ce que**
un promoteur choisi parmi Pt, Ru, Rh, et Au est modifié sur la surface du matériau du photocatalyseur, et
le décomposeur photocatalytique (103; 203 ; 303 ; 403) est adapté à décomposer la vapeur (106) générée par le générateur (102 ; 202 ; 302 ; 402) de vapeur ou liquéfié en eau en refroidissant la vapeur (106) en hydrogène et oxygène par la lumière (105) et le photocatalyseur.

2. Appareil (200) de décomposition photocatalytique selon la revendication 1, dans lequel une partie inclinée (205) est prévue sur une surface intérieure du boîtier (101 ; 201, 301 ; 401) et adaptée à laisser la vapeur (106) générée par le générateur (202) de vapeur ou l'eau se déplacer le long de la partie inclinée (205) et être amenée jusqu'au décomposeur photocatalytique (203).

3. Appareil (300) de décomposition photocatalytique selon la revendication 1, comprenant en outre une partie de corps noir (305) qui est prévue sur une surface supérieure du générateur (302) de vapeur et est adaptée à absorber plus de chaleur que le générateur (302) de vapeur.

4. Appareil (400) de décomposition photocatalytique selon la revendication 1, dans lequel le décomposeur photocatalytique (403) est prévu sur une surface sur laquelle la lumière (105) provenant du boîtier (401) est incidente, et adapté à laisser la lumière (105) transmise à travers le décomposeur photocatalytique (403) être amenée jusqu'au générateur (402) de vapeur.
